# EUROPEAN PATENT APPLICATION

(11) **EP 4 112 820 A1**
(43) Date of publication of application: **04.01.2023**
(21) Application number: 21305890.2
(22) Date of filing: 29.06.2021
(51) Int. Cl.: E02F 5/10, H02G 1/10

(54) **TOWING UMBILICAL FOR PLOUGH**

(71) Applicant: Nexans, 92400 Courbevoie (FR)
(72) Inventor: SOLHEIM, Harald, 0260 OSLO (NO)
(74) Representative: Ipsilon

(57) **Abstract**

The present invention relates to a burying system (1) for burying a cable/pipe (3) in a trench (T) in a seabed (SB). The burying system (1) comprises a plough (10), an umbilical (81) for providing communication with, and for supplying power to, the plough (10) and a wire (82) for towing the plough (10) along the seabed.
The umbilical (81) and the wire (82) are integrated as one single towing umbilical (80).

## Description

### FIELD OF THE INVENTION

The present invention relates to a burying system for burying a cable/pipe in a trench in a seabed. The present invention also relates to a towing umbilical connectable between a vessel and a plough. The present invention also relates to a towing umbilical termination bullet for mechanically connecting a wire of a towing umbilical to a plough.

### BACKGROUND OF THE INVENTION

Ploughs for burying cables or pipes in the seabed are well known.

Prior art ploughs are disclosed in for instance EP 0117038 A1, EP 0278705 B1, GB 2357134 A and US 3333432.

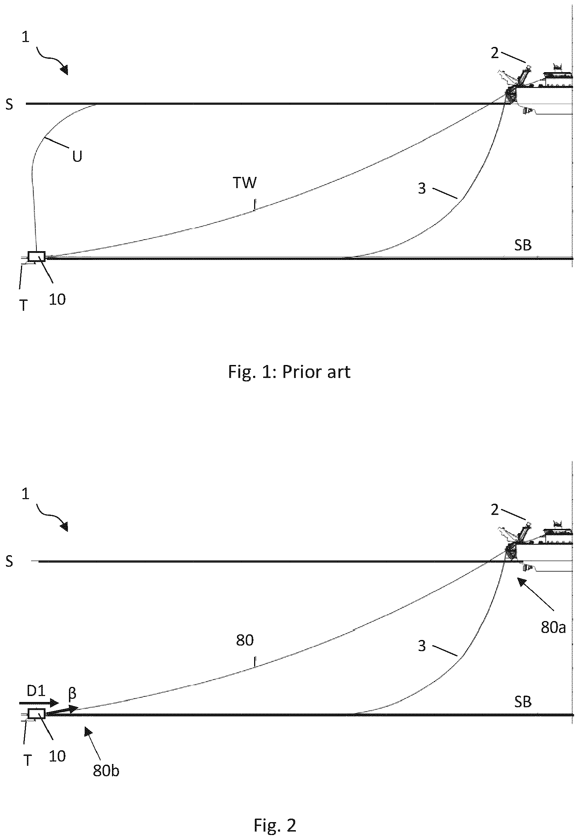

In fig. 1, a prior art burying system 1 for burying a cable or pipe 3 is shown, comprising a plough 10, an umbilical U and a towing wire TW. In fig. 1, a vessel 2 is also shown. The plough 10 is designed to plough a trench T below the seabed SB and place the cable/pipe 3 in the trench in a single operation. The seabed surface is indicated as S. It should be noted that a lifting wire separate from the towing wire and the umbilical is used to lift the plough from the vessel to the seabed and from the seabed to the vessel. This lifting wire is disconnected during ploughing.

The plough 10 is towed along the seabed by means of the towing wire TW. The plough comprises a number of sensors and actuators (hydraulic actuators, electric actuators, etc.) for operating the plough during the burying operation. Communication signals between the vessel and the sensors, communication signals between the vessel and the actuators, and power supply from the vessel to the actuators are transferred by means of the umbilical U connected between the vessel and the plough.

The umbilical U is partially floating by means of buoyancy objects secured to the umbilical. During deployment of the umbilical U, the buoyancy objects are secured to the umbilical by means of a manual operation, with a considerable risk for injuries (crunch injuries etc).

In addition, the floating umbilical will be affected by sea currents and weather, which must be taken into consideration during planning of the burying operation and when performing the burying operation. The floating umbilical may form a dangerous obstacle for other vessels, and there is also a risk of damages to the floating umbilical due to impacts with the shore, other vessels etc. Hence, during the planning of the burying operation, time windows with favorable weather and sea currents are identified to reduce the risks involved with the floating umbilical.

The object of the present invention is to reduce the risk of injuries during handling of the umbilical. The object of the present invention is also to reduce the duration of the burying operation, and to reduce the dependency of time windows with favorable weather and sea currents.

### SUMMARY OF THE INVENTION

The present invention relates to a burying system for burying a cable/pipe in a trench in a seabed, wherein the burying system comprises:
- a plough;
- an umbilical for providing communication with, and for supplying power to, the plough;
- a wire for towing the plough along the seabed;
characterized in that the umbilical and the wire are integrated as one single towing umbilical.

In one aspect, the burying system comprises a towing umbilical termination bullet mechanically connecting the wire to the plough.

In one aspect, the plough comprises a bridle, wherein the towing umbilical termination bullet is connected to the bridle of the plough.

In one aspect, the bridle is a rigid bridle.

In one aspect, the bridle is pivotably connected to the plough, thereby defining a first pivoting axis.

In one aspect, the towing umbilical termination bullet is pivotably connected to the bridle, thereby defining a second pivoting axis.

In one aspect, the umbilical termination bullet has a central longitudinal axis, wherein the second pivoting axis is perpendicular to the central longitudinal axis of the umbilical termination bullet. In one aspect, the central longitudinal axis is coinciding with the central axis of a plough end of the towing umbilical.

In one aspect, the first pivoting axis is perpendicular to the second pivoting axis.

In one aspect, the first pivoting axis is parallel with a towing plane.

As used herein, the term "towing plane" is defined by a plurality of skids of the plough. When assuming a planar seabed at the location of the plough during a burying operation, i.e. assuming that all skids are in contact with the seabed, the towing plane is considered to be identical to the plane of the seabed at the location of the plough.

In one aspect, the first pivoting axis is perpendicular to a direction of ploughing.

As used herein, the term "towing direction" is defined as the direction in which the plough is moved relative to the seabed. As the plough is towed by means of a vessel located at a relatively large distance from the plough, it can be assumed that the turning radius for the plough during the burying operation is relatively large. Hence, the towing direction will approximately coincide with a horizontal centre axis of the plough.

In one aspect, the bridle comprises two struts and a strut joint joining the two struts in a V-shaped structure, wherein the towing umbilical termination bullet is mechanically connecting the wire to the strut joint of the bridle. In one aspect, the bridle comprises a cross member connected between the two struts. Hence, the two struts, the strut joint and the cross member are configured in an A-shaped structure.

In one aspect, the towing umbilical termination bullet is pivotably connected to the strut joint. In one aspect, the struts are pivotably connected to the strut joint.

In one aspect, the towing umbilical termination bullet comprises a housing and a termination insert insertable into the housing, wherein strands of the wire is terminated inside of the housing and outside of the termination insert, wherein the umbilical is guided through the termination insert and out from the housing.

In one aspect, there is a distance between the termination insert and the second pivoting axis.

In one aspect, a plough-facing opening of the towing umbilical termination bullet has a diameter larger than the outer diameter of the umbilical. In one aspect, the diameter of the plough-facing opening is at least two times as large as the diameter of the umbilical. Preferably the diameter of the plough-facing opening is at least three or four times the diameter of the umbilical.

According to the above, the umbilical is allowed to exit the housing with a large bending radius.

In one aspect, the umbilical is guided through the termination insert, out from the housing and further along one of the struts of the bridle to the plough.

In one aspect, the burying system comprises a pivoting restrictor for restricting downward pivoting of the bridle relative to the plough.

In one aspect, the pivoting restrictor is allowing pivoting of the bridle relative to the plough with an angle between -15° to + 70° relative to the towing plane.

In one aspect, the umbilical is provided centrally within the towing umbilical and wherein the wire is provided radially outside of the umbilical.

In one aspect, the towing umbilical has an outer diameter, wherein the umbilical has an outer umbilical diameter, wherein the outer diameter is at least twice of the umbilical diameter.

In one aspect, the towing umbilical is connectable to a vessel. The burying system may or may not be considered to comprise the vessel, this is considered as a matter of definition only.

The present invention also relates to a towing umbilical connectable between a vessel and a plough, wherein the towing umbilical comprises:
- a central umbilical for providing communication between the vessel and the plough and for supplying power from the vessel to the plough;
- a wire provided radially outside of the umbilical for transferring towing forces between the vessel and the plough during a burying operation.

In one aspect, the towing umbilical is a towing umbilical for the burying system according to the above.

The present invention also relates to a towing umbilical termination bullet for mechanically connecting a wire of a towing umbilical to a plough, wherein the towing umbilical termination bullet comprises a housing and a termination insert insertable into the housing, wherein strands of the wire are terminated inside of the housing and outside of the termination insert, wherein an umbilical of the towing umbilical is guided through the termination insert and out from the housing.

In one aspect, the strands of the wire are moulded inside of the housing and outside of the termination insert.

In one aspect, the towing umbilical termination bullet is a towing umbilical for the burying system according to the above.

According to the above, the umbilical is handled as part of the towing umbilical. Hence, the operation of securing buoyancy objects to the umbilical is eliminated. Hence, as there is no floating part of the umbilical, many of the factors which in prior art are reducing the time windows with favorable weather and sea currents are eliminated. Hence, more frequent and/or longer time windows with favorable weather and sea currents are achieved, and hence the duration of the total burying operation may be reduced.

According to the above, the umbilical is protected by the wire sections of the wire.

The towing umbilical has a considerably larger diameter than the prior art towing wire and is hence heavier. According to the above pivoting restrictor, the risk of damages to the cable/pipe caused by a moving towing umbilical, is reduced.

### DETAILED DESCRIPTION

Embodiments of the invention will now be described in detail with reference to the enclosed drawings, wherein:
Fig. 1 illustrates a prior art burying system;
Fig. 2 illustrates a first embodiment of the burying system according to the present invention;
Fig. 3 illustrates a perspective view of a plough connected to the towing umbilical;
Fig. 4 illustrates an enlarged view of the dashed box in fig. 3;
Fig. 5 illustrates a side view of the plough connected to the towing umbilical of fig. 3;
Fig. 6 illustrates a top view of the plough connected to the towing umbilical of fig. 3 and 5;
Fig. 7 illustrates a cross sectional view of the towing wire;
Fig. 8a illustrates a perspective view of a termination bullet;
Fig. 8b illustrates a side view of the termination bullet;
Fig. 8c illustrates a cross sectional top view of the termination bullet along line A-A in
Fig. 9 illustrates an alternative embodiment of the bridle;
Fig. 10 illustrates yet an alternative embodiment of the bridle;
Fig. 11 illustrates yet an alternative embodiment of the bridle.

It is now referred to fig. 2. In fig. 2, it is shown a burying system 1 for burying a cable/pipe 3 in a trench T in a seabed SB by means of a vessel 2. The burying system 10 comprises a plough 10, and a towing umbilical 80 having a vessel end 80a connected to the vessel 2 and a plough end 80b connected to the plough 10.

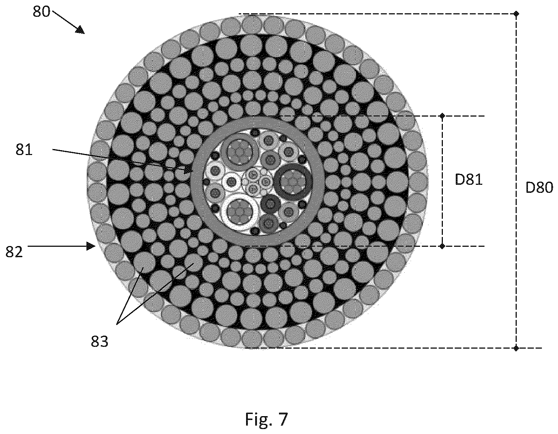

In fig. 7, it is shown that the towing umbilical 80 comprises an umbilical 81 provided centrally within the towing umbilical 80 and a wire 82 provided radially outside of the umbilical 81. The wire 82 comprises a plurality of strands 83. By arranging the wire 82 radially outside of the umbilical 81, the towing umbilical is considered to be one single towing umbilical.

The umbilical 81 is providing communication between the vessel 2 and the plough 10, and is transferring power, for example electric or hydraulic power, from the vessel 2 to the plough 10.

The plurality of strands 83 of the wire 82 is providing the function of transferring towing forces between the vessel 2 and the plough 10 during a burying operation. The forces required to tow the plough 10 during a burying operation may typically vary between 40 - 130 tons, but may for shorter periods of time be up to 150 tons.

The towing umbilical 80 is shown to have an outer diameter D80 and the umbilical 81 is shown to have an outer umbilical diameter D81. The outer diameter D80 is at least twice of the umbilical diameter D81, in fig. 7, the outer diameter D80 is approximately 2.5 times the umbilical diameter D81.

As is apparent from fig. 7, the wire section 82 of the towing umbilical 80 is not identical to the wire section of the prior art towing wire TW of fig. 1, due the umbilical 81 located in the centre of the towing umbilical 80. It should further be noted that the umbilical 81 being a part of the towing umbilical 80 is not necessarily identical to the prior art umbilical U shown in fig. 1. According to the above, the umbilical 81 and the wire 82 are considered to be integrated as one single towing umbilical 80.

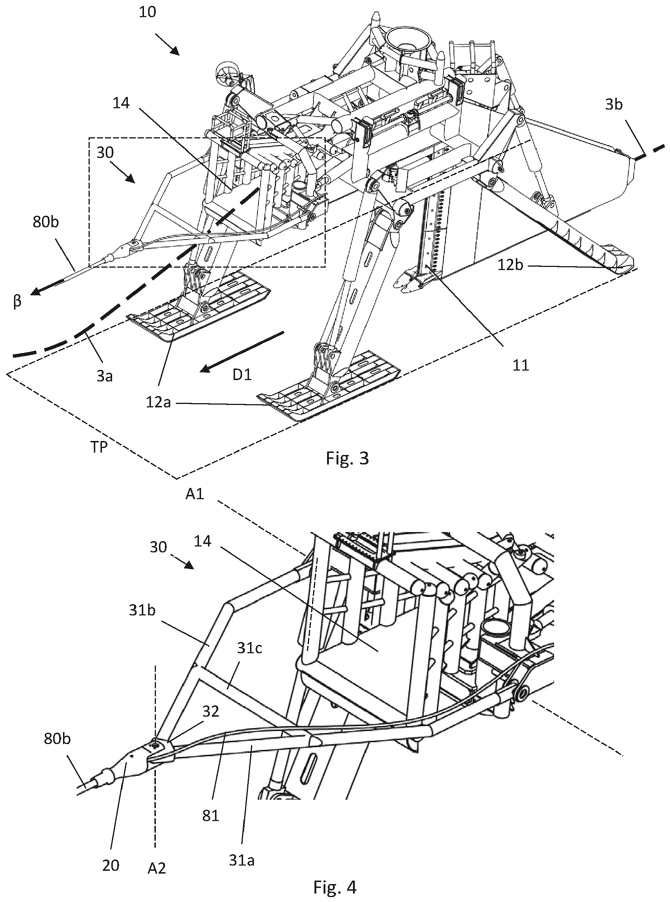

It is now referred to fig. 3, fig. 4, fig. 5 and fig. 6. The plough 10 comprises four skids, two front skids 12a and two rear skids 12b. The plough 10 further comprises a ploughshare 11 between the two rear skids 12b. The ploughshare 11 is aligned with a longitudinal centre axis L10 of the plough 10. The plough 10 further comprises a mouthpiece 14, at which the cable/pipe 3 is received by the plough 10, and a tail 15 at which the cable/pipe 3 is leaving the plough 10. The cable/pipe 3 in front of the mouthpiece 14 is indicated with reference number 3a, while the cable/pipe 3 on the rear end of tail 15 is indicated with reference number 3b.

In fig. 3, the cable/pipe 3a, 3b is indicated by a dashed line indicating its centre axis. In fig. cable/pipe 3a, 3b is indicated by a dashed rectangle, representing a more realistic diameter of the cable/pipe 3a, 3b.

It is now referred to fig. 4. Here it is shown that the plough 10 further comprises a bridle 30. The bridle 30 is rigid, and comprises a first strut 31a and a second strut 31b, wherein a first end of the first strut 31a and a first end of the second strut 31b are joined by means of a strut joint 32. In addition, the bridle 30 comprises a cross member 31c, connecting the first strut 31a and the second strut 31b at a distance from the strut joint 32. As shown in fig. 4, the struts 31a, 31b, 31c are configured in an A-shaped structure, resembling a capital letter "A".

A second end of the first strut 31a and a second end of the second strut 31b are pivotably connected to the plough 10. A first pivoting axis A1 is indicated in fig. 4, fig. 5 and fig. 6 as the axis around which the bridle 30 can be pivoted with respect to the plough 10.

It is now referred to fig. 4. Here it is shown that the burying system 1 comprises a pivoting restrictor 40 for restricting downward pivoting of the bridle 30 relative to the plough 10. The pivoting restrictor may in addition restrict the upward pivoting of the bridle 30 relative to the plough 10. The non-restricted pivoting of the bridle 30 is indicated as an angle α between -15° to + 70° relative to the towing plane TP.

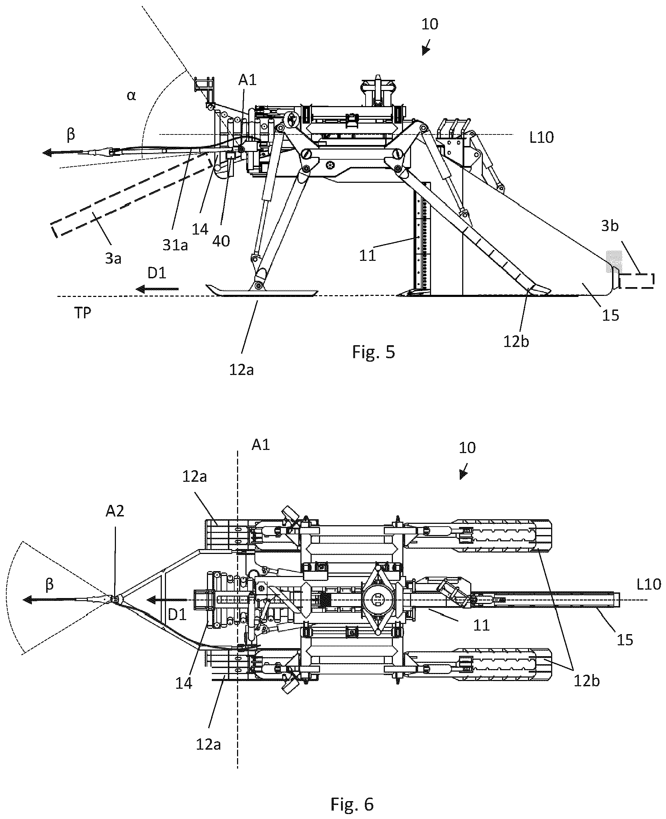

In fig. 3 and fig. 5, a towing plane TP is indicated by dashed lines. The towing plane TP is defined by the skids 12a, 12b. When assuming a planar seabed SB at the location of the plough 10 during a burying operation, i.e. assuming that all skids 12a, 12b are in contact with the seabed SB, the towing plane TB is considered to be identical to the plane of the seabed SB at the location of the plough 10. It should be noted that fig. 3 and 5 shows the ploughshare 11 in its elevated position - during a burying operation, the skids 12a, 12b will be moved upwardly relative to the ploughshare 11 and the tail 15 in order to plough a trench T in the seabed SB and guide the cable/pipe 3 into the trench T.

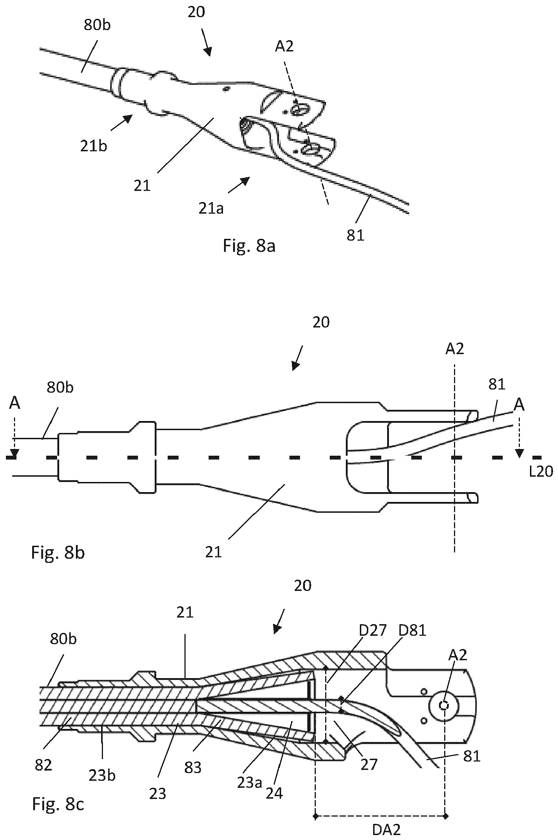

It is now referred to fig. 4, fig. 8a, fig. 8b and fig. 8c. Here it is shown that the burying system 1 comprises a towing umbilical termination bullet 20 mechanically connecting the wire 82 of the towing umbilical 80 to the plough 10. The towing umbilical termination bullet 20 comprises a housing 21 defined with a longitudinal centre axis L20 between a plough facing side 21a of the housing 21 and a vessel facing side 21b of the housing 21. Due to the relative stiff towing umbilical 80, the central longitudinal axis L20 will coincide with central axis of a plough end 80b of the towing umbilical 80.

The housing 21 comprises a longitudinal through bore 23 from the plough facing side 21a to the vessel facing side 21b, the bore 23 having a conical section 23a at the plough facing side 21a tapering towards a cylindrical section 23b at the vessel facing side 21b. A plough facing opening into the conical section 23a is indicated with reference number 27 in fig. 8c.

The plough end 80b of the towing umbilical 80 is received within the cylindrical section 23b of the bore 23, wherein strands 83 of the wire 82 is pressed radially outwards within the conical section 23a by means of an termination insert 24. The strands 83 are secured radially outside of the termination insert 24 and radially inside the conical section 23a of the bore 23 by means of a moulding process. The general moulding process of strands of a wire to a termination bullet is considered well known for a person skilled in the art and will not be described further in detail herein.

The umbilical 81 is guided longitudinally through the termination insert 24, and out from the opening 27 of the housing 21 and further to the plough 10, which will be described further in detail below.

As shown in fig. 4, the towing umbilical termination bullet 20 is pivotably connected to the strut joint 32 of the bridle 30. A second pivoting axis A2 is indicated in fig. 4, as the axis around which the towing umbilical termination bullet 20 can be pivoted with respect to the bridle 30. As shown in fig. 8b, the second pivoting axis A2 is perpendicular to the central longitudinal axis L20 of the umbilical termination bullet 20.

As shown in fig. 4 and fig. 6, the first pivoting axis A1 is also perpendicular to the second pivoting axis A2.

As shown in fig. 8c, there is a distance DA2 between the end of the termination insert 24 and the second pivoting axis A2. In addition, the plough-facing opening 27 of the towing umbilical termination bullet 20 has a diameter D27 being considerably larger than the outer diameter of the umbilical 81. In fig. 8c, it is shown that the diameter of the plough-facing opening 27 is at least three or four times the diameter of the umbilical 81. Due to the distance D2 and the relatively larger diameter of the plough-facing opening 27, the umbilical 81 is allowed to exit the housing 21 with a large bending radius, preventing damage of the umbilical 81 during pivoting of the towing umbilical termination bullet 20 relative to the bridle 30.

In fig. 4 it is shown that the umbilical 81 is guided out from the plough-facing opening 27 of the housing 21 and further along one of the struts 31 of the bridle 30 to the plough 10, wherein the umbilical is terminated at a junction box of the plough 10.

In fig. 3 and fig. 6, a towing direction D1 is indicated as the direction in which the plough 10 is moved relative to the seabed SB. As the plough 10 is towed by means of a vessel 2 located at a relatively large distance from the plough 10, it can be assumed that the turning radius for the plough 10 during the burying operation is relatively large. Hence, the towing direction D1 will typically coincide with a horizontal centre axis L10 of the plough 10. The towing direction D1 is parallel with or coinciding with the towing plane TP. Of course, when the cable/pipe 3 is not inserted onto or into the plough 10, for example movement of the plough 10 relative to the cable/pipe 3 before the burying operation has started, and movement of the plough 10 relative to the cable/pipe 3 after the burying operation has ended, the towing direction D1 may deviate from the horizontal centre axis L10 of the plough 10. It should be noted that the towing direction D1 is different from a towing angle β, defined as the orientation of the plough end 80b of the towing umbilical 80 relative to the towing plane. The variation in the towing angle β is indicated in fig. 6.

The first pivoting axis A1 is perpendicular to a direction of ploughing D1.

Due to the stiffness of the towing umbilical 80, the towing angle β will typically correspond to the angle of the bridle 30 relative to the towing plane.

It should be noted that the present invention may be used with different types of ploughs, both new ploughs and prior art ploughs. Technical details of the plough which are not considered relevant for the towing umbilical will not be described in detail herein.

### Alternative embodiments

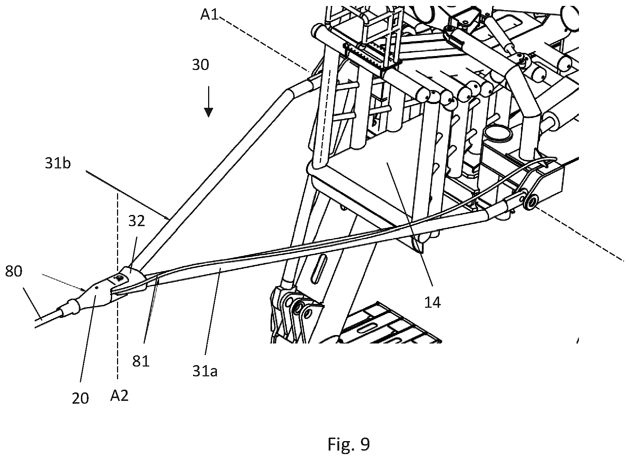

It is now referred to fig. 9. Here it is shown that the bridle has no cross member 31c. Hence, the two struts 31a, 31b and the strut joint 32 joining the two struts 31a, 31b are configured in a V-shaped structure.

The distance between the strut joint 32 is also longer in fig. 9 than in fig. 3.

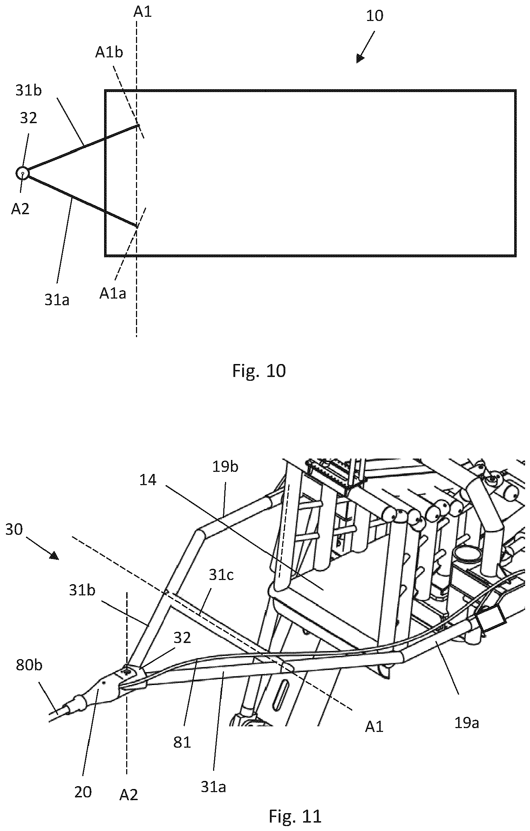

It is now referred to fig. 10. Here it is shown that the first strut 31a is pivotably connected to the plough (simplified as a rectangle indicated by reference number 10), thereby defining a pivoting axis A1a, while the second strut 31a is pivotably connected to the plough, thereby defining a pivoting axis A1b being different than the pivoting axis A1a. The second pivoting axis A2 is still perpendicular to these two axis A1a, A1b.

It should be noted that the struts may be connected to the strut joint by means of a pivotable connection, for example in a similar way a spelter socket. However, due to the triangular structure (above referred to as A-shaped or V-shaped structure), the bridle 10 as a whole is considered as a rigid structure.

It is now referred to fig. 11. Here it is shown that the plough 10 comprises struts 19a, 19b protruding on the front side of the plough 10, on each side of the mouthpiece 14. These struts 19a, 19b are non-pivotable with respect to the plough 10. The bridle 30 with its struts 31a, 31b are pivotably connected to the struts 19a, 19b, as indicated by the pivoting axis A1 in fig. 11.

## Claims

1. Burying system (1) for burying a cable/pipe (3) in a trench (T) in a seabed (SB), wherein the burying system (1) comprises:
- a plough (10);
- an umbilical (81) for providing communication with, and for supplying power to, the plough (10);
- a wire (82) for towing the plough (10) along the seabed;
**characterized in that** the umbilical (81) and the wire (82) are integrated as one single towing umbilical (80).

2. Burying system (1) according to claim 1, wherein the burying system (1) comprises a towing umbilical termination bullet (20) mechanically connecting the wire (82) to the plough (10).

3. Burying system (1) according to claim 2, wherein the plough (10) comprises a bridle (30), wherein the towing umbilical termination bullet (20) is connected to the bridle (30) of the plough (10).

4. Burying system (1) according to claim 3, wherein the bridle (30) is a rigid bridle (30).

5. Burying system (1) according to claim 3 or 4, wherein the bridle (20) is pivotably connected to the plough (10), thereby defining a first pivoting axis (A1; A1a, A1b).

6. Burying system (1) according to any one of claims 3 - 5, wherein the towing umbilical termination bullet (20) is pivotably connected to the bridle (20), thereby defining a second pivoting axis (A2).

7. Burying system (1) according to claim 5 and 6, wherein the first pivoting axis (A1; A1a, A1b) is perpendicular to the second pivoting axis (A2).

8. Burying system (1) according to any one of claims 5 - 7, wherein the first pivoting axis (A1) is perpendicular to a direction of ploughing (D1).

9. Burying system (1) according to any one of claims 3 - 8, wherein the bridle (20) comprises two struts (31a, 31b) and a strut joint (32) joining the two struts (31a, 31b) in a V-shaped structure, wherein the towing umbilical termination bullet (20) is mechanically connecting the wire (82) to the strut joint (32) of the bridle (20). In one aspect, the bridle (20) comprises a cross member (31c) connected between the two struts (31a, 31b). Hence, the two struts (31a, 31b), the strut joint (32) and the cross member (31c) are configured in an A-shaped structure.

10. Burying system (1) according to any one of claims 2 - 9, wherein the towing umbilical termination bullet (20) comprises a housing (21) and a termination insert (24) insertable into the housing (21), wherein strands (83) of the wire (82) is terminated inside of the housing (21) and outside of the termination insert (24), wherein the umbilical (81) is guided through the termination insert (24) and out from the housing (21).

11. Burying system (1) according to any one of claims 3 - 10, wherein the burying system (1) comprises a pivoting restrictor (40) for restricting downward pivoting of the bridle (20) relative to the plough (10).

12. Burying system (1) according to any one of the above claims, wherein the umbilical (81) is provided centrally within the towing umbilical (80) and wherein the wire (82) is provided radially outside of the umbilical (81).

13. Towing umbilical (80) connectable between a vessel (2) and a plough (10), wherein the towing umbilical (80) comprises:
- a central umbilical (81) for providing communication between the vessel (2) and the plough (2) and for supplying power from the vessel (2) to the plough (10);
- a wire (82) provided radially outside of the umbilical (81) for transferring towing forces between the vessel (2) and the plough (10) during a burying operation.

14. Towing umbilical termination bullet (20) for mechanically connecting a wire (82) of a towing umbilical (80) to a plough (10), wherein the towing umbilical termination bullet (20) comprises a housing (21) and a termination insert (24) insertable into the housing (21), wherein strands (83) of the wire (82) are terminated inside of the housing (21) and outside of the termination insert (24), wherein an umbilical (81) of the towing umbilical (80) is guided through the termination insert (24) and out from the housing (21).

15. Towing umbilical termination bullet (20) according to claim 14, wherein the strands (83) of the wire (82) are moulded inside of the housing (21) and outside of the termination insert (24).
